(19) **Europäisches Patentamt**

**European Patent Office**

**Office européen des brevets**

(11) **EP 0 550 466 B1**

(12) **EUROPEAN PATENT SPECIFICATION**

(45) Date of publication and mention
of the grant of the patent:
**26.03.1997 Bulletin 1997/13**

(21) Application number: **91915462.5**

(22) Date of filing: **29.08.1991**

(51) Int. Cl.$^6$: **A23L 1/025**, A23B 7/10,
A23L 3/3508

(86) International application number:
**PCT/US91/06205**

(87) International publication number:
**WO 92/03934 (19.03.1992 Gazette 1992/07)**

(54) **ACID-STABILIZED FOOD PRODUCTS AND METHOD FOR PREPARING THE SAME**

DURCH SÄURE STABILISIERTE NAHRUNGSMITTEL UND VERFAHREN ZUR HERSTELLUNG
DERSELBEN

PRODUITS ALIMENTAIRES STABILISES PAR ACIDE ET LEUR PROCEDE DE PREPARATION

(84) Designated Contracting States:
**AT BE CH DE DK ES FR GB GR IT LI LU NL SE**

(30) Priority: **31.08.1990 US 576010**

(43) Date of publication of application:
**14.07.1993 Bulletin 1993/28**

(73) Proprietor: **MARS, INCORPORATED**
**McLean, VA 22103 (US)**

(72) Inventors:
• **REITER, Harvey, J.**
**Houston, TX 77062 (US)**
• **FRITSCH, Dale**
**Houston, TX 77095 (US)**
• **SCHERER, Bryan**
**Spring, TX 77379 (US)**

• **COVERT, Cheryl, A.**
**Houston, TX 77035 (US)**

(74) Representative: **Mercer, Christopher Paul**
**Carpmaels & Ransford**
**43, Bloomsbury Square**
**London WC1A 2RA (GB)**

(56) References cited:
WO-A-91/03169          WO-A-91/03171
CA-A- 1 071 920        JP-A-58 081 735
JP-A-59 042 838        JP-A-59 216 542
US-A- 4 504 504        US-A- 4 959 230

• PATENT ABSTRACTS OF JAPAN vol. 6, no. 063
(C-099)22 April 1982
• PATENT ABSTRACTS OF JAPAN, Vol. 12, No.
209, 15 June 1988; for JP-A-63007770 (NIPPON
KAYAKUGO., Ltd).

## Description

## FIELD OF THE INVENTION

The present invention relates to acid-stabilized food products and to processes for the preparation of the acid-stabilized food products.

## BACKGROUND OF THE INVENTION

Fresh food products have an appealing taste, color and texture. However, a major drawback of these fresh products is that they spoil rapidly if not used immediately. Fresh food products are usually meant to be purchased, prepared if desired, and consumed in a short period of time. Often, fresh food products are refrigerated as a way of prolonging freshness. But, even at low storage temperatures, many fresh food products have a very limited term.

In fact, from the moment of harvest, food undergoes progressive deterioration and preventative measures must be taken to prolong storage life. Food preservation techniques attempt to retain the food's nutritional value and to prolong the stability of the food's organoleptic properties.

Methods of preservation involve the application of scientific and engineering principles to control food deterioration. Modern processes to achieve food preservation are aimed primarily at controlling the growth of microorganisms.

Drying is one of the oldest methods of food preservation known. Sun drying of fruits, nuts and grains, meats and vegetables is an important method of food preservation. However, since the natural elements are unpredictable, mechanical dehydration equipment is used to maximize heat transfer into the product and afford greater control of the drying variables. Commercially used dried foods include apples, apricots, figs, prunes, raisins, carrots, potatoes, bananas, eggs, and milk. Most dried foods have excellent shelf life, are reasonably inexpensive, and, because of convenience, have widespread use in the food service industry.

Fresh food products also have been prepared or even precooked and provided in cans. Canned products such as vegetables typically are prepared as follows: blanching the vegetables in boiling water to soften the vegetables; filling the blanched vegetables into a can together with a sauce or syrup if desired; sealing the can; and retorting the sealed can under time-temperature conditions sufficient to provide a sterile product - typically about one hour at 115°C. Since the canned product and its environment typically have a water content which will support the growth of spoilage organisms, the canned product must be subjected to relatively severe heat processing conditions in order to produce a sterile product. The product is then maintained in the sterile state, by sealing it in the can. This protects against microorganism-spoilage and makes a commercially feasible product. Processing under these severe conditions, however, results in a taste and texture which is less than optimal, and often limits the acceptability of the canned products.

Food products are also available in a frozen state which can be freshly boiled, heated or cooked in the home immediately prior to consumption. However, freezing adds considerable expense to the manufacturing and delivery costs of the products. Moreover, frozen products are perceived by many consumers to be less desirable then products prepared directly from a fresh, unfrozen product.

An approach to the problem of degradation of the color of foodstuffs has been to treat them with chemicals. For example, sulfating agents such as sulphur dioxide, sodium and potassium bisulfite, sodium and potassium metabisulfite and sodium sulfite, have been successfully used for controlling or reversing discoloration of a wide variety of foodstuffs, including fruits and vegetables, potatoes, hominy, mushrooms and soup mixes. However, the use of these sulfating agents has not been without problems. They tend to produce sulfurous odors and flavors, and though they heretofore have been generally regarded as safe, recently they have been implicated as potential health hazards (for example, as initiators of asthmatic attack and other adverse reactions in sensitive people). Also, the sodium containing agents are contraindicated with respect to hypertensive individuals.

The art has long been searching for an alternative to the foregoing. The alternative should provide a product which has an extended life at room temperature or under normal conditions of refrigeration, is easily prepared and stored, has substantially no off-flavor in a state suitable for consumption, and (when in a state suitable for consumption) is at least palatable and pleasing in appearance.

In past attempts to achieve some of these desired attributes, it has been proposed that food products could be treated with acid to yield a suitable product.

Microorganisms are sensitive to acids in various degrees. The preserving effect of acid is due to the hydrogen ion concentration and its destabilization effect on bacterial cells. Acids may be found in foods as a natural component, produced in foods by fermentation, or added to foods directly as a chemical. Since acid enhances the lethality of heat, acid foods (pH 4.6 or below) need only be heated generally up to about 95°C which is much lower than the heat needed for more alkaline foods (low acid; pH above 4.6) to render them free of spoilage organisms. The acids commonly added to foods (acetic, citric, malic) create a distinct "pickled" flavor, which in many instances detracts from the natural home-cooked flavor. Moreover, the foods to which they have been added are technically termed acidified.

Each of the following patents discloses treating one or more foodstuffs with one or more acids:

| JP 62-130644 | EP 0012255 | UK 2036533 | DE 3624035 |
|---|---|---|---|
| US 2383907 | EP 201266 | UK 2174588 | |
| US 4789553 | US 4181747 | US 3886296 | US 3985904 |
| US 4741911 | US 4542033 | US 4191787 | US 2291704 |
| US 4818549 | US 4740380 | US 4675202 | US 4564527 |
| US 3446630 | US 4814192 | US 4762726 | US 3366490 |
| US 2992114 | US 2790717 | US 2819972 | US 2819973 |
| US 2434388 | | | |

The foodstuffs treated in these patents include such items as fruits, vegetables, meats, slurries of vegetable seed fiber, salad dressings, sauces, beverages including juices, and egg yolks. The acids used include ascorbic, acetic, citric, lactic, malic, tartaric, fumaric, adipic, succinic, phosphoric, nitric, hydrochloric, sulphuric, levulinic, gluconic, propionic, hydroxyacetic, maleic, glutaric, palmitic, itaconic, aldonic, sorbic, cinnamic and benzohydroxamic, among others.

Also, the following patents and paper apparently use pectin, carrageenan and/or alginic acid to form gels around various foodstuffs:

| JP 59-210863 | EP 253535 | SE 389796 |
|---|---|---|
| EP 277448 | UK 1118730 | JP 81-131375 |
| US 3991218 | JP 57-26746 | US 4837037 |

Hara, Food Industry, 1988, 31(6) 76-85.

JP-A-57005680 describes the use of an alginic acid solution and an ethanol solution for food preservation. The food is briefly dipped in an alginic acid solution of pH 3-6 at 5-80°C for 2-30 seconds. The food is then briefly dipped in aqueous ethanol. The resulting preserved foodstuffs have enhanced self-life. Shelf-life of up to 50 days is reported for certain treated vegetables, but most foods preserved in this way have shelf life of 15 days or less.

Additionally, JP-A-6 307 770 apparently describes the preparation of a noodle which contains an acid preservative in its dough. The preservative includes a food-acceptable organic acid, a salt of such an acid and a water-soluble macromolecular polysaccharide or chitosan. The organic acid may be citric, tartaric, malic, fumaric, lactic, acetic or gluconic acid. The polysaccharide may be alginic acid or sodium alginate. However, the polysaccharide appears to be used solely as a texturizing agent. Based on an analysis of this application, it is believed that the free polysaccharide is not present as part of the final product since the polysaccharide appears to be neutralized by the organic acid salt. Moreover, there is no report of stability of the product beyond 10 days.

WO91/03171, which was published after the priority date of the present application but claims an earlier priority, describes shelf-stable rice products and processes for their production. The products are made by heating the rice in the presence of a polymeric food-acceptable acid such as alginic acid so as to achieve acid stabilization or acid pasteurization of the rice. The polymeric food-acceptable acid is found to effect acid stabilization without introducing acid flavor notes into the rice.

Thus, it can be seen that there have been many attempts to develop acid-treated products which can be stored effectively for an extended period of time. However, these attempts typically involve treatment with conventional food acids - i.e., generally low molecular weight inorganic or organic acids - and, at least as far as is known, none has resulted in a product with all of the attributes required of a premium product, namely (i) extended life at room temperature or normally prevailing refrigeration temperatures, (ii) ease of preparation and storage, (iii) substantially no off-flavor when in a condition suitable for consumption, and (iv) when in such condition, palatability and a fresh, pleasant appearance. For example, while some conventional acid-treated products may have a somewhat extended storage-or shelf-life, they have a foreign acid taste. Indeed, it would seem to be inevitable that a product treated with acid will have an acid taste.

Provision of a premium product having the full complement of advantageous features described above would be a substantial advance over the technology discussed heretofore.

## OBJECTS OF THE INVENTION

Accordingly, it is an object of the invention to provide an acid-stabilized food product.

It is an additional object of the invention to provide a food product which has an extended life at room temperature or under normal conditions of refrigeration.

It is another object of the invention to provide a food product which is easily prepared and stored.

It is still another object of the invention to provide a food product which has substantially no off-flavor.

It is a further object of the invention to provide a food product which, when in a condition suitable for consumption, is at least palatable and pleasing in appearance.

It is still a further object of the invention to provide a food product in a suitable container.

It is yet a further object of the invention to provide a method for the preparation of the above-mentioned food products.

These and other objects of the invention will be readily apparent from the following description and claims.

The present invetion provides a method for the preparation of an acid-stabilized foodstuff other than rice selected from the group consisting of vegetables, fruits, dairy-based products, egg-based products, sauces, salad dressings, puddings, soups, vegetable beverages and fruit beverages, which comprises heat treating the foodstuff with one or more food-acceptable acids, including at least one polymeric food-acceptable acid, in an amount sufficient to lower the pH (as hereinafter defined) of the foodstuff below 4.6 for a time of at least 5 minutes and at a centre temperature of at least 85°C to effect the foodstuff's acid-stabilization against microorganism spoilage for at least 90 days without introducing foreign acid flavor notes into said foodstuff.

The method of the present invention may additionally comprise the step of packaging the foodstuff in a container, wherein the above acid-stabilization heating step may be carried out either before or after the packaging step.

The present invention also provides an acid-stabilized or shelf-stable foodstuff other than rice comprising a polymeric food-acceptable acid, having a pH (as hereinafter defined) less than 4.6 and obtainable by the method of the present invention.

Finally, the present invention further provides a container having an acid-stabilized or shelf-stable foodstuff other than rice comprising a polymeric food-acceptable acid, having a pH (as hereinafter defined) less than 4.6 packaged therein, and obtainable by the method of the present invention.

The food products in accordance with the present invention are advantageous in that they have the full complement of features required of a premium product, in contrast to prior products which are deficient in one or more important respects. For example, the products of the present invention are easily prepared and stored. Further, they have an extended life, and thus lend themselves to distribution, display and sale in a wide range of commercial settings, for instance in high-volume supermarkets, in convenience stores and in food-service establishments. Because of the unique attributes of the present invention, there is no need to sacrifice the taste and texture of a premium product in order to secure the versatility in adaptation to the different marketing environments described above.

Furthermore, in certain embodiments, the invention is advantageous in eliminating the need for specialized delivery and storage conditions which result in considerable cost savings. Unlike conventional fresh and frozen products, which must be refrigerated, the products of the present invention, in these embodiments, can be held at ambient temperature for long periods of time without damaging the product or affecting its acceptability. The substantial economies resulting from obviating the need for refrigeration make the product commercially appealing from a cost standpoint.

In other embodiments, the products of the present invention can be held under refrigeration and will resist microorganism spoilage for substantially longer periods of time than are achieved with currently available conventional refrigerated products.

## DESCRIPTION OF CERTAIN PREFERRED EMBODIMENTS

The acid-stabilized products of the invention, and the methods of preparing them, provide a product having the attributes of a premium product. They are preserved food products with enhanced resistance to microorganism spoilage.

Essentially any food product is considered to be usable in accordance with the invention. Specifically included are vegetables, fruits, egg products (including omelettes and quiches), sauces (including tomato-based sauces, purees and gravies), soups, salad dressings, dairy-based products (cream sauces, cheeses, cheesecake, and custard), puddings, fillings for pasta, icing, beverages (especially vegetable beverages and fruit beverages including juices), spices, extracts and cereal products. Examples of vegetables which are particularly well suited to use in accordance with the invention include carrots, zucchini, red bell peppers and corn. Examples of fruits which are particularly well suited to use in accordance with the invention are cherries, blueberries, strawberries and peaches.

As used herein, the term "acid-stabilized food products" means food products treated with a suitable acid or acids, either in the free or dissociated state, under conditions (e.g., amount of acid, time of treatment, pH of treatment medium, temperature, etc.) such that the number of microbes destroyed in the food product is sufficient, at least under conditions of refrigeration, to result in the food product's maintaining its resistance to microorganism-spoilage for 90 days or more. Further, as used herein, to "treat" with acid(s) refers to treatment in any way suitable for effecting intimate contact between the food product and the acid(s), for example, by boiling the food product in acidified water, by incorporating the acid(s) directly in the food product during formulation, by soaking the food product in acidified water, some combination of two or more of those measures, or the like.

For purposes of this invention, a product is considered to be "shelf-stable" when that product remains of acceptable quality from the time of manufacture until the anticipated time of consumption without means of preservation such as refrigeration. While a shelf-life of even 3 or 4 months would be acceptable under certain circumstances, typically, ready-to-eat products are considered to be shelf-stable if they remain of acceptable quality for at least 9 months, preferably at least 12 months, and especially at least 14 months. Sensory attributes of particular interest in assessing shelf-stability are color, texture, aroma, flavor, rancidity and tartness. A product is shelf-stable when these attributes are of acceptable quality after passage of the desired time. In particular, the growth of spoilage microorganisms should be inhibited in a shelf-stable product and this minimization over long periods of time is the hallmark of shelf-stability.

By "precooked" is meant that the food product can be prepared for consumption merely by heating it, for instance in a conventional oven or a microwave oven, or by steaming it or immersing it in hot or boiling water, to elevate the food product to a desired temperature for consumption. In a precooking step, the product is cooked for a sufficient time such that no prolonged heat treatment will be necessary in order to complete the cooking for consumption. This step can be carried out either in water or in an aqueous solution or suspension of acid.

Typically, the precooked product is reheated for a time of 30 seconds to 3 minutes. For example, in certain embodiments the product is heated in a microwave oven for a short time, e.g., about two minutes. In this way, if the product is heated in final preparation for dining, so little heating is necessary that essentially no further cooking occurs. However, in certain advantageous embodiments, since the precooked product is already fully cooked and ready to eat from the container, it can be used at room-temperature or in a cold salad with no heating.

In still another advantageous embodiment, however, the product simulates fresh, refrigerated product and is not fully cooked.

Thus, in certain embodiments of the invention, the food product is pre-cooked or at least cooked partially during preparation for storage and display pursuant to marketing. In these embodiments, the acid-stabilization of the product typically renders it shelf-stable. However, in other embodiments, the food product simulates a fresh refrigerated product. The food products in such cases is advantageously refrigerated, and under those conditions exhibits an extended life vis-a-vis conventional refrigerated products.

An essential feature of the present invention is the utilization of at least one polymeric, typically macromolecular, food-acceptable acid. Typically, these acids are of high molecular weight, for example, having a subunit molecular weight of about 190, and can be copolymeric substances if desired. Of course, they are non-toxic, and additionally are materials which have the capability of retarding growth of spoilage microorganisms without imparting a foreign acidic or other undesirable "off" flavor to the product.

The preferred polymeric food-acceptable acids have a cellulosic or saccharide-derived backbone with pendent carboxyl groups. A preferred polymeric acid in accordance with the invention is alginic acid; also preferred are the non-alginic polymeric food-acceptable acids such as carrageenic acid, pectinic acid, and carboxymethyl cellulose acid. Combinations of two or more of the foregoing acids can also be utilized.

The acid is used in an amount sufficient to attain conditions which result in the treated product's exhibiting the desired shelf-life or extended life, and one or more other attributes of a premium product without imparting foreign acid flavor notes. It can be appreciated that the precise quantity of acid utilized in any particular embodiment will often depend on other considerations, such as the nature of the final product desired (for example, refrigerated but not necessarily shelf-stable, or non-refrigerated and substantially shelf-stable, etc.), the amount and type of food product, the pH desired, other substances present, etc. For example, when the product is a precooked product which is precooked by boiling, the acid can be present in an amount of from about .05 to 2 wt.% of the cooking medium or brine. However, the quantity can vary from one embodiment to another, and its determination is empirical. It is, in any event, within the capability of one ordinarily skilled in the art, once equipped with the teachings set forth herein, to determine the amount of acid which is needed.

While the polymeric food-acceptable acid may be introduced as such, it can alternatively be generated in situ, for instance, by reaction between a salt of the polymeric acid and an inorganic acid. For instance, alginic acid may be generated by reacting sodium alginate with hydrochloric acid.

Additionally, derivatives of the acid may be used in place of the acid, or derivatives of the acid may be formed during cooking and be present in the product. All these embodiments are contemplated herein.

That the use of a polymeric food-acceptable acid enables food products to be made shelf-stable, and have all the other attributes required of a premium product, is surprising for a number of reasons. For example, previously proposed procedures which used an acid have all resulted in products which do not have all the attributes required of a premium product. One typical failing is that the acids used impart an unpalatable foreign acid taste to the product. However, this failing is remedied by the present invention.

The suitability of polymeric food-acceptable acids is additionally surprising since, as far as is known, these acids have never before been successfully used as acidulants for food products. The aforementioned Japanese patent application, JP-A-6 307 770, apparently discloses use of polysaccharides, but not as acidulants. Rather, they are believed to be used as texturizing agents, and are not believed to survive processing. Other uses of the polymeric acids, and their sodium or calcium salts, are as thickening agents or coatings in food products. Also, alginates have been used as stabilizers in ice cream, water ices, sherbets and cheese, as gelling agents in water dessert gels and milk puddings, as suspending and thickening agents in fruit drinks and beverages, as foam stabilizers in beer, as emulsifiers in salad dressings and as film forming agents in coatings for meat and fish. Additionally, U.S. Patent No. 3,332,786 apparently discloses that propylene glycol alginate "stabilizes" starch. (The specific starches mentioned are natural or modified starches derived from corn, wheat, potatoes, waxy maize and tapioca). However, this stabilization relates to the ability to withstand freeze-thaw cycles or gelling problems. It does not relate to, nor was it recognized as having any ability to providing, shelf-stability or other extension of product life as discussed herein.

Thus, the prior art provides no suggestion that such polymeric food-acceptable acids could be used as acidulants, let alone with the surprising results shown by the present invention.

Moreover, these polymeric acids are generally only sparingly soluble in water. For this reason, it is surprising that they can act as acidulants at all. It is further unexpected that they can produce the required acidification to produce a stable product without the use of undesirably large quantities of the acid.

In certain advantageous embodiments, one or more conventional acidulants is utilized in addition to the polymeric acid. The conventional acidulants will be used to assist in controlling the pH of the product at the desired level. Typically, the conventional acidulant is present in a brine for cooking the product, in an amount of about .25%. However, in some embodiments, the conventional acidulant is incorporated in the product formulation. In certain embodiments, the conventional acidulant replaces some of the polymeric food-acceptable acid which would otherwise be needed. However, it should be ensured that the amount of conventional acidulant used is not so large as to impart an unacceptable flavor to the product, and that the amount of polymeric food-acceptable acid is not decreased to the extent that the advantages of the invention are lost.

Suitable conventional acidulants include inorganic acids, such as phosphoric, sulfuric and hydrochloric acids, and organic acids, such as citric, malic, acetic, fumaric, tartaric, adipic, lactic, ascorbic, sorbic, propionic and erythrobic acids. Citric acid is especially preferred, but malic and ascorbic acids are also preferred.

To measure the pH of the product, a known amount of the product, for example a 100 gram sample, is combined with an equivalent weight of distilled water in a blender until a homogeneous paste is achieved. Electrode tips are immersed in the paste while the paste is stirred. The electrode is allowed to stabilize for one minute before the pH reading is taken.

Treatment of the food products in accordance with the invention varies as appropriate with the particular food product to be acid-stabilized. Thus, in accordance with certain embodiments of the invention, and particularly for treating a food product such as vegetables and fruits, the food product is precooked, typically by boiling it to bring it to the desired state of preparation. However, boiling is not necessary and the product may be precooked at temperatures below 100°C. In certain embodiments, the temperature is between 90°C and 100°C, preferably about 95°C. When it is expected that significant heat-exposure will be necessary in subsequent processing steps, such as pasteurization or other stabilization, the extent of prior partial cooking - e.g., cooking time and/or temperature - is commensurately less. Typically, the product is precooked (including any pasteurization or other stabilization) for 5-30 minutes, especially 7-16 minutes, for instance by boiling in an aqueous solution or suspension of at least one polymeric food-acceptable acid. The aqueous solution or suspension typically has a pH from about 2.0-4.0, especially 2.4-2.8. However, the exact time, pH, temperature and other conditions of precooking can vary from one embodiment to another, and the skilled artisan will be able to derive the particular precooking parameters best suited to the situation empirically, based on his level of skill and the teachings set forth herein. For example, it will be appreciated that the cooking times of the product will vary depending on the size, thickness and shape of the product and the degree to which it is precooked. Further guidance regarding suitable conditions to be used can be obtained from a study of the examples set forth hereinafter. Given the above disclosure and the examples, one skilled in the art will be able to determine appropriate conditions for processing the food products.

Salt and/or sugar, and other flavorings, for example at about 1 to 2% each, can also be used in the cooking medium or brine.

If desired, the product can be quenched after the initial treatment, typically at room temperature. It is preferred that the product be quenched, in an aqueous solution or suspension of at least one polymeric food-acceptable acid as already described, after heating in connection with precooking or partial cooking. A quenching liquid can also advantageously contain one or more conventional acidulants (also as already described) besides the polymeric acid. Whether or not a quenching liquid is used, the product can be washed (for instance in water) between steps and separated from, e.g. drained of, all free liquid prior to packaging or at least prior to sealing the container.

Further, if desired, the foodstuff can be contacted with an amount of edible oil sufficient to prevent the foodstuff from sticking together. Typically, the edible oil is used in an amount of from about 0.5 to 1% by weight of the product. Examples of the oils include rice oil, sunflower oil, soybean oil, cottonseed oil, or rapeseed oil.

In any event, after processing, the pH of the product is below 4.6. This is the generally recognized maximum pH which ensures that the pasteurized product remains shelf-stable. Typically, the pH of the product is in the range of about 3.8 to 4.6, preferably 3.8 to 4.2. In one preferred embodiment, the pH of the product is about 4.0. The pH can be below 3.8. However, the lower the pH, the more acid must be used and the more difficult it is to avoid acid flavor in the product. As a practical matter, the skilled person given the instant disclosure will be able to balance the pH level and amount of acid used to ensure that the product is shelf-stable and has substantially no foreign acid flavor notes.

In other embodiments, it is desired to incorporate the acid in the product formulation. This is particularly useful for acid-stabilizing sauces, salad dressings, puddings, soups, vegetable beverages, fruit beverages, dairy-based products and egg-based products.

The products of the present invention are then typically packaged in a container having a configuration, construction and constituent material such that it is capable of maintaining the acid-stabilized product - i.e., providing an environment in which the product's shelf-stability or extended life due to acid-stabilization is not appreciably diminished by extraneous influences for substantially the entire period of its shelf-stability or extended life. During packaging, in certain embodiments, the product is first cooled. The package is advantageously a container made of a microorganism-impermeable and/or waterproof material, for example glass, foil or a suitable plastic, and in some embodiments it is a container (for example, a pouch) made of oxygen-impermeable material. Such containers include, for example, cans, jars, bottles, foil trays, plastic trays, foil pouches and plastic pouches. The containers may be flexible or rigid. A particularly preferred container is a plastic tray, advantageously used with a foil or plastic lid. The plastic may be a single layer or, preferably a laminated material comprising a reinforcing layer, such as a nylon or polyester layer, and a sealing layer such as a polyethylene, polyvinylidene chloride or EVOH layer, for instance nylon/polyethylene or polyester/polyethylene. Alternatively, the package can be a laminate of board and plastics material, such as that sold by Combibloc. The advantage of packaging the products of the invention in plastic materials is that the products can be reheated in a microwave oven without the need to decant it before reheating.

In one embodiment, the products are packaged in the container under vacuum prior to pasteurization or other processing in connection with partial cooking (in which case the container is capable of withstanding heating attendant to such pasteurization or other processing). In other embodiments, the products of the present invention are preferably packed in the container under an inert gas atmosphere, for example, to avoid any discoloration of the product by oxidation during pasteurization, other processing, storage or display. Typically, the container is flushed with an inert gas, and then the container is sealed and sterilized. Any suitable, non-toxic inert gas can be used, but nitrogen and especially carbon dioxide or mixtures of nitrogen and carbon dioxide are preferred. Typically, the atmosphere within the container is substantially free of oxygen. The package can be hermetically sealed.

The use of carbon dioxide is particularly advantageous in certain embodiments because it should provide further protection against spoilage. For instance, if the product of the present invention is subjected to such conditions as would allow water to gather in the package, such water could provide a breeding ground for microorganisms. However, if the product is packed in a carbon dioxide atmosphere, the gas will dissolve in free water present. This makes the water a much less conducive environment for growth of microorganisms. In other embodiments, food grade diatomic nitrogen is advantageously employed. By this measure, $CO_2$ produced by spoilage microorganisms will not be masked by $CO_2$ introduced as the inert atmosphere, and the detection of $CO_2$ will be an indication of the presence of such microorganisms.

The packaging often includes substantially evacuating the container for holding the product, i.e., so that the air content in the container does not exceed 5%. In certain embodiments, pasteurization is effected by holding the product in the sealed container at a temperature of about 85°C, for example, about six minutes in steam for a pack 20mm thick, followed by drying and cooling. When the product in the package is cool, reheating to the temperature mentioned above can be effected with steam or in hot water. Alternatively, the product may be pasteurized or otherwise processed in connection with partial cooking before the package is sealed.

In those embodiments of the invention which include a pasteurization step, sometimes herein referred to as acid-pasteurization, the minimum requirements are that the center temperature of the food should be held for a time sufficient to achieve killing of microorganisms. The center temperature of the food is held at a minimum of 85°C for at least five minutes, and the food has a pH less than 4.6. As a minimum, the pasteurization step, whatever the pH, should hold a center temperature of 85°C for five minutes. More preferably, a center temperature of 93°C should be held for 10 minutes. Generally, if the pasteurization step is carried out at a temperature of 100°C or less, it is not necessary to use a pressurized heating system. The pasteurization step can be carried out under atmospheric pressure using hot water or steam to heat the product. If the pasteurization step is carried out at a temperature above 100°C, then the use of a pressurized system will prevent water from being driven off. In any event, the product is pasteurized while it is maintained at a pH of less than 4.6 by the use of the aqueous solution or suspension of at least one polymeric food-acceptable acid.

Accordingly, however treated, the finished products in the invention have a pH below 4.6. Preferably, the products have a pH from about 2.8 to 4.2. In particular, the products have a pH of about 4.0. Additionally, the products typically contain a characteristic acid component. This component preferably is included in an amount of approximately 0.05% -2% (w/w), and especially 0.6% (w/w).

The acid component in the product includes any residue or moiety of the acid molecule which is present in the treated product and is a reflection of the fact that the product has been treated.

As described, the product of the invention has the full complement of advantages and features that should be demanded of a premium product, namely (i) extended life at room temperature or normally prevailing refrigeration temperatures, (ii) ease of preparation and storage, (iii) substantially no off-flavors when in a condition suitable for consumption, and (iv) palatability and a fresh, pleasant appearance.

The present invention is further described and illustrated in the following examples. It will be appreciated that these examples are provided solely for the purposes of illustrating the invention and not for the purpose of limitation. It will further be appreciated that variations and modifications to the product and process can be made by the skilled person without departing from the spirit or scope of the invention as defined in the appended claims.

## Examples 1 and 2

A 500 gram sample of a vegetable blend which includes chopped zucchini, carrots and red bell peppers in the relative ratios of 55:45:10 is used in these examples. Each sample is blanched at 90°C for 5 minutes. The blanching solution contains (in grams):

| Ex. | Water | Sugar | Salt | Calcium Chloride | Tartaric Acid | Ascorbic Acid | Alginic Acid |
|---|---|---|---|---|---|---|---|
| 1 | 3573.4 | 327.0 | 62.0 | 17.6 | | | 20.0 |
| 2 | 3573.4 | 327.0 | 62.0 | 17.6 | 5.2 | 4.4 | 10.4 |

After blanching, each sample is quenched in the blanching solution at room temperature for 20 minutes, and then rinsed with water for 1 minute. The pH of the treated vegetable blend in Example 1 is 3.45, and in Example 2 is 3.68.

When reheated, the vegetable blend has organoleptic properties similar to a vegetable blend cooked in a conventional manner by boiling in water.

## Example 3

A 1100 gram sample of the following chopped vegetable blend is used in this sample:

| zucchini | 550g |
|---|---|
| carrots | 450g |
| red bell peppers | 100g |
| | 1100g |

The sample is blanched at 90°C for 5 minutes; drained for 1 minute; and held for 20 minutes in the blanching solution at room temperature. The blanching solution contains (in grams):

| Water | Sugar | Salt | Calcium Chloride | Alginic Acid |
|---|---|---|---|---|
| 3640.8 | 261.6 | 62.0 | 17.6 | 18.0 |

The ph of the treated vegetable blend is 3.47.

When reheated, the vegetable blend has organoleptic properties similar to a vegetable blend cooked in a conventional manner by boiling in water.

## Example 4

A chopped vegetable blend which includes 49.2% zucchini, 41.5% carrots and 9.3% red bell peppers is prepared and treated under the same condition as in Example 3 with the following blanching solution:

| Water | Sugar | Salt | Alginic Acid | Calcium Chloride |
|---|---|---|---|---|
| 91.00% | 6.56% | 1.55% | 0.45% | 0.44% |

The treated vegetable blend is combined with creamy Italian Dressing in a jar, and the jar is nitrogen flushed before sealing. The pH of the vegetables and dressing is less than 4.0. The mixed product has organoleptic properties similar to other non-treated products of the same type.

## Example 5

A chicken gravy of the following formulation is prepared:

| | |
|---|---|
| Water | 87.14% |
| Modified Starch | 3.46% |
| Margarine | 3.05% |
| Chicken Flavor | 2.96% |
| Flour | 2.14% |
| Emulsifier | 0.44% |
| Dairy Solids | 0.33% |
| Food Gum | 0.25% |
| Salt | 0.17% |
| Spice | 0.17% |
| | 100.00% |

A second formulation is prepared with the addition of 0.200% alginic acid.

The first formulation is processed under full retort conditions at 115°C to achieve commercial sterility. The pH of the product is 6.20.

The second formulation is processed under pasteurization conditions at 93°C for acidified products to achieve commercial sterility. The pH of the product is 4.11.

The second formulation shows significant improvement in color due to reduced processing conditions, and no significant acidic notes are detectable.

## Comparative Example 6-8

The following cheesecake formulations are prepared (weight is in grams):

| Ex. | Eggs | Cream Cheese | Algicinic Acid | Lemon Juice | HCl 1N | Sugar | Salt | Swiss Cheese | Graham Crumbs |
|---|---|---|---|---|---|---|---|---|---|
| 6 | 254 | 200 | 9.0 | 5.8 | 50 | 150 | 0.5 | --- | 3.0 |
| 7 | 254 | --- | 9.0 | 5.8 | 50 | 150 | 0.5 | 200 | 3.0 |
| 8 | 254 | 200 | 9.0 | 5.8 | 50 | 150 | 0.5 | --- | 3.0 |

To prepare the cheesecake, the cheese is softened and blended thoroughly with the eggs. The acids and lemon juice are mixed and then thoroughly combined with the egg mixture. The sugar and salt are added and the mixture is blended. Finally, the mixture is poured into trays. Graham crumbs are sprinkled over the top. The product is packaged and pasteurized.

The pH of the product after processing is 2.7 for Trial 1, 4.2 for Trial 2 and 2.66 for Trial 3.

The resulting product has an excellent flavor and texture, and the organoleptic properties in general are similar to a conventional product.

### Examples 9-12

Sliced potatoes are blanched at 90° C in the following blanching solutions (weight in grams):

| Trial | Water | Algicinic Acid | Citric Acid | Potatoes | Blanch Time | Final pH |
|---|---|---|---|---|---|---|
| 1 | 4000 | 60 | 4 | 200 | 17 | 4.18 |
| 2 | 4000 | 50 | -- | 500 | 45 | 4.8 |
| 3 | 4000 | 12 | 10 | 400 | 10 | 4.8 |
| 4 | 4000 | 12 | 10 | 400 | 12 | 4.8 |

(Trials 2, 3 and 4 are comparative examples. The samples in Trials 3 and 4 were quenched in 4000g water and 12g alginic acid for 2 minutes after blanching.)

The resulting sliced potatoes had organoleptic properties similar to potatoes cooked in a conventional manner by boiling in water.

The terms and expressions which have been employed are used as terms of description and not of limitation, it being recognized that various modifications are possible within the scope of the invention as defined in the accompanying claims.

## Claims

1. A method for the preparation of an acid-stabilized foodstuff other than rice selected from the group consisting of vegetables, fruits, dairy-based products, egg-based products, sauces, salad dressings, puddings, soups, vegetable beverages and fruit beverages, which comprises heat treating the foodstuff with one or more food-acceptable acids, including at least one polymeric food-acceptable acid, in an amount sufficient to lower the pH of the foodstuff below 4.6 for a time of at least 5 minutes and at a center temperature of at least 85°C to effect the foodstuff's acid-stabilization against microorganism spoilage for at least 90 days without introducing foreign acid flavor notes into said foodstuff.

2. A method as defined in claim 1, wherein the polymeric food-acceptable acid is alginic acid.

3. A method as defined in claim 1 or 2, which comprises cooking said foodstuff in an aqueous solution or suspension containing said polymeric food-acceptable acid.

4. A method as defined in claim 3, wherein said aqueous solution or suspension containing at least one polymeric food-acceptable acid has a pH from 2.4 to 2.8.

5. A method as defined in claim 3 or 4, wherein at least one other food-acceptable acid is dissolved or suspended in the aqueous solution or suspension of at least one polymeric food-acceptable acid.

6. A method as defined in claim 5, wherein each said other food-acceptable acid is selected from the group consisting of citric, malic, fumaric, tartaric, phosphoric, adipic, lactic, ascorbic, sorbic, propionic, erythorbic, sulfuric and hydrochloric acids.

7. A method as defined in any of claims 3 to 6, which further comprises quenching said cooked foodstuff in an aqueous solution or suspension of at least one polymeric food-acceptable acid.

8. A method as defined in claim 7, wherein the polymeric food-acceptable acid used for quenching is alginic acid.

9. A method as defined in claim 7 or 8, wherein at least one other food-acceptable acid is dissolved or suspended in the aqueous solution or suspension of at least one polymeric food-acceptable acid used for quenching.

10. A method as defined in claim 9, wherein each said other food-acceptable acid dissolved or suspended in the aqueous solution or suspension used for quenching is selected from the group consisting of citric, malic, acetic, fumaric, tartaric, phosphoric, adipic, lactic, ascorbic, sorbic, propionic, erythorbic, sulfuric and hydrochloric acids.

11. A method as defined in any preceding claim, which comprises subjecting the foodstuff to processing conditions such that the foodstuff is in an acid-pasteurized state.

12. A method as defined in any preceding claim, which comprises subjecting the foodstuff to processing conditions such that the foodstuff is in a precooked state.

13. A method as defined in any of claims 3 to 10, which further comprises separating said cooked foodstuff from residual solution or suspension.

14. A method as defined in any of claims 3 to 10, which further comprises contacting said cooked foodstuff with an amount of edible oil sufficient to prevent the foodstuff from sticking together.

15. A method as defined in claim 14, wherein said amount of edible oil is from 0.5 to 1% by weight of the foodstuff.

16. A method according to any preceding claim which comprises treating said foodstuff such that the foodstuff has a pH below 4.6.

17. A method according to claim 16 which comprises treating said foodstuff such that the foodstuff has a pH between 3.8 and 4.2.

18. A method according to any preceding claim further comprising the step of packaging the foodstuff in a container.

19. A method as defined in claim 18, which comprises subjecting the foodstuff to conditions such that the foodstuff in the package is in a precooked or partially cooked state.

20. A method as defined in claim 18 or 19, wherein said packaging step comprises inserting a measured amount of said foodstuff into the container, flushing the container with an inert gas and sealing the container.

21. A method as defined in claim 16 or 17, wherein said packaging step comprises substantially evacuating the container for holding the foodstuff.

22. A method as defined in any of claims 18 to 21, wherein said container is microorganism-impermeable, waterproof, or both microorganism-impermeable and waterproof.

23. A method as defined in any of claims 18 to 22, wherein said container is a plastic tray or pouch.

24. A method as defined in claim 23, wherin said plastic tray or pouch comprises a laminate of reinforcing layer and a sealing layer.

25. A method according to any of claims 18 to 24 wherein the foodstuff is treated with the said at least one polymeric food-acceptable acid to effect acid-stabilisation of the foodstuff after the said packaging step.

26. An acid-stabilised foodstuff comprising a polymeric food-acceptable acid other than rice, having a pH less than 4.6 and obtainable by a method according to any of claims 1 to 17.

27. A container having an acid-stabilised foodstuff other than rice comprising a polymeric food-acceptable acid, having a pH less than 4.6 packaged therein obtainable by a method according to any of claims 18 to 25.

**Patentansprüche**

1. Ein Verfahren zur Herstellung eines von Reis verschiedenen durch Säure stabilisierten Nahrungsmittels, das ausgewählt ist aus der Gruppe, die aus Gemüse, Früchten, Produkten auf der Basis von Molkereierzeugnissen, Produkten auf der Basis von Eiern, Soßen, Salatdressings, Puddings, Suppen, Gemüsegetränken und Fruchtgetränken besteht, welches umfaßt, daß das Nahrungsmittel mit einer oder mehreren nahrungsmitteltauglichen Säuren, die wenigstens eine polymere nahrungsmitteltaugliche Säure einschließen, in einer Menge, die ausreichend ist, um den pH des Nahrungsmittels unter 4,6 zu senken, für einen Zeitraum von wenigstens 5 Minuten und bei einer Mittentemperatur von wenigstens 85°C hitzebehandelt wird, um die Säurestabilisierung des Nahrungsmittels gegen Verderbnis durch Mikroorganismen für wenigstens 90 Tage zu bewirken, ohne in besagtes Nahrungsmittel fremde Säure-Geschmacks- und -Geruchsnoten einzuführen.

2. Ein Verfahren nach Anspruch 1, wobei die polymere nahrungsmitteltaugliche Säure Alginsäure ist.

3. Ein Verfahren nach Anspruch 1 oder 2, welches umfaßt, daß besagtes Nahrungsmittel in einer wäßrigen Lösung oder Suspension gekocht wird, die besagte polymere nahrungsmitteltaugliche Säure enthält.

4. Ein Verfahren nach Anspruch 3, wobei besagte wäßrige Lösung oder Suspension, die wenigstens eine polymere nahrungsmitteltaugliche Säure enthält, einen pH von 2,4 bis 2,8 besitzt.

5. Ein Verfahren nach Anspruch 3 oder 4, wobei wenigstens eine weitere nahrungsmitteltaugliche Säure in der wäßrigen Lösung oder Suspension wenigstens einer polymeren nahrungsmitteltauglichen Säure gelöst oder suspendiert wird.

6. Ein Verfahren nach Anspruch 5, wobei jede besagte weitere nahrungsmitteltaugliche Säure ausgewählt ist aus der Gruppe, die aus Zitronensäure, Äpfelsäure, Fumarsäure, Weinsäure, Phosphorsäure, Adipinsäure, Milchsäure, Ascorbinsäure, Sorbinsäure, Propionsäure, D-Araboascorbinsäure, Schwefelsäure und Salzsäure besteht.

7. Ein Verfahren nach einem der Ansprüche 3 bis 6, das außerdem umfaßt, daß besagtes gekochtes Nahrungsmittel in einer wäßrigen Lösung oder Suspension wenigstens einer polymeren nahrungsmitteltauglichen Säure abgeschreckt wird.

8. Ein Verfahren nach Anspruch 7, wobei die polymere nahrungsmitteltaugliche Säure, die zum Abschrecken verwendet wird, Alginsäure ist.

9. Ein Verfahren nach Anspruch 7 oder 8, wobei wenigstens eine weitere nahrungsmitteltaugliche Säure in der wäßrigen Lösung oder Suspension wenigstens einer polymeren nahrungsmitteltauglichen Säure, die zum Abschrecken verwendet wird, gelöst oder suspendiert wird.

10. Ein Verfahren nach Anspruch 9, wobei jede besagte weitere nahrungsmitteltaugliche Säure, die in der wäßrigen Lösung oder Suspension, die zum Abschrecken verwendet wird, gelöst oder suspendiert wird, ausgewählt ist aus der Gruppe, die aus Zitronensäure, Äpfelsäure, Essigsäure, Fumarsäure, Weinsäure, Phosphorsäure, Adipinsäure, Milchsäure, Ascorbinsäure, Sorbinsäure, Propionsäure, D-Araboascorbinsäure, Schwefelsäure oder Salzsäure besteht.

11. Ein Verfahren nach einem vorangehenden Anspruch, welches umfaßt, daß das Nahrungsmittel solchen Behandlungsbedingungen unterzogen wird, daß das Nahrungsmittel in einem säurepasteurisierten Zustand ist.

12. Ein Verfahren nach einem vorangehenden Anspruch, welches umfaßt, daß das Nahrungsmittel solchen Behandlungsbedingungen unterzogen wird, daß das Nahrungsmittel in einem vorgekochten Zustand ist.

13. Ein Verfahren nach einem der Ansprüche 3 bis 10, welches außerdem umfaßt, daß besagtes gekochtes Nahrungsmittel von restlicher Lösung oder Suspension abgetrennt wird.

14. Ein Verfahren nach einem der Ansprüche 3 bis 10, welches weiter umfaßt, daß besagtes gekochtes Nahrungsmittel mit einer Menge an Speiseöl in Kontakt gebracht wird, die ausreichend ist, um zu verhindern, daß das Nahrungsmittel zusammenklebt.

15. Ein Verfahren nach Anspruch 14, wobei besagte Menge an Speiseöl von 0,5 bis 1 Gew.-% des Nahrungsmittels beträgt.

16. Ein Verfahren nach einem vorangehenden Anspruch, welches umfaßt, daß besagtes Nahrungsmittel derart behandelt wird, daß das Nahrungsmittel einen pH unter 4,6 besitzt.

17. Ein Verfahren nach Anspruch 16, welches umfaßt, daß besagtes Nahrungsmittel derart behandelt wird, daß das Nahrungsmittel einen pH zwischen 3,8 und 4,2 besitzt.

**18.** Ein Verfahren nach einem vorangehenden Anspruch, welches weiter den Schritt des Abpackens des Nahrungsmittels in einem Behälter umfaßt.

**19.** Ein Verfahren nach Anspruch 18, welches umfaßt, daß das Nahrungsmittel solchen Bedingungen unterzogen wird, daß das Nahrungsmittel in der Verpackung in einem vorgekochten oder teilweise gekochten Zustand ist.

**20.** Ein Verfahren nach Anspruch 18 oder 19, wobei besagter Abpackschritt umfaßt, daß eine abgemessene Menge besagten Nahrungsmittels in den Behälter eingebracht, der Behälter mit einem Inertgas gespült und der Behälter versiegelt wird.

**21.** Ein Verfahren nach Anspruch 16 oder 17, wobei besagter Abpackschritt umfaßt, daß der Behälter zur Aufnahme des Nahrungsmittels im wesentlichen evakuiert wird.

**22.** Ein Verfahren nach einem der Ansprüche 18 bis 21, wobei besagter Behälter für Mikroorganismen undurchlässig, wasserdicht oder sowohl gegen Mikroorganismen undurchlässig als auch wasserdicht ist.

**23.** Ein Verfahren nach einem der Ansprüche 18 bis 22, wobei besagter Behälter eine Kunststoffschale oder ein Pouch ist.

**24.** Ein Verfahren nach Anspruch 23, wobei besagte Kunststoffschale oder besagter Pouch ein Laminat aus Verstärkungsschicht und einer Sperrschicht umfaßt.

**25.** Ein Verfahren nach einem der Ansprüche 18 bis 24, wobei das Nahrungsmittel mit der besagten wenigstens einen polymeren nahrungsmitteltauglichen Säure behandelt wird, um Säurestabilisierung des Nahrungsmittels nach dem besagten Abpackschritt zu bewirken.

**26.** Ein von Reis verschiedenes durch Säure stabilisiertes Nahrungsmittel, das eine polymere nahrungsmitteltaugliche Säure umfaßt, mit einem pH von weniger als 4,6 und erhältlich mit einem Verfahren nach einem der Ansprüche 1 bis 17.

**27.** Ein Behälter mit einem von Reis verschiedenen durch Säure stabilisierten Nahrungsmittel, das eine polymere nahrungsmitteltaugliche Säure umfaßt, mit einem pH von weniger als 4,6, das darin abgepackt ist, erhältlich mit einem Verfahren nach einem der Ansprüche 18 bis 25.

## Revendications

**1.** Procédé de préparation d'un produit alimentaire, stabilisé par un acide, autre que le riz, sélectionné dans le groupe comprenant les légumes, les fruits, les produits à base de lait, les produits à base d'oeuf, les sauces, les assaisonnements de salades, les puddings, les soupes, les jus de légumes et les jus de fruits, ledit procédé comprenant le traitement à chaud du produit alimentaire avec un ou plusieurs acides acceptables au plan alimentaire, notamment au moins un acide polymère acceptable au plan alimentaire, en quantité suffisante pour abaisser le pH du produit alimentaire en dessous de 4,6 pendant une période d'au moins 5 minutes et à une température centrale d'au moins 85°C pour assurer la stabilisation par le ou les acides du produit alimentaire à l'encontre d'une dégradation par des micro-organismes pendant au moins 90 jours sans introduire des nuances de saveur acide étrangères dans ledit produit alimentaire.

**2.** Procédé selon la revendication 1, dans lequel l'acide polymère acceptable au plan alimentaire est l'acide alginique.

**3.** Procédé selon la revendication 1 ou 2, qui consiste à cuire ledit produit alimentaire dans une solution ou une suspension aqueuse contenant ledit acide polymère acceptable au plan alimentaire.

**4.** Procédé selon la revendication 3, dans lequel ladite solution ou suspension aqueuse contenant au moins un acide polymère acceptable au plan alimentaire a un pH de 2,4 à 2,8.

**5.** Procédé selon la revendication 3 ou 4, dans lequel au moins un autre acide acceptable au plan alimentaire est dissous ou mis en suspension dans la solution ou suspension aqueuse d'au moins un acide polymère acceptable au plan alimentaire.

**6.** Procédé selon la revendication 5, dans lequel chaque dit autre acide acceptable au plan alimentaire est sélec-

tionné dans le groupe comprenant les acides citrique, malique, fumarique, tartrique, phosphorique, adipique, lactique, ascorbique, sorbique, propionique, érythorbique, sulfurique et chlorhydrique.

7. Procédé selon l'une quelconque des revendications 3 à 6, qui consiste par ailleurs à tremper ledit produit alimentaire cuit dans une solution ou suspension aqueuse d'au moins un acide polymère acceptable au plan alimentaire.

8. Procédé selon la revendication 7, dans lequel l'acide polymère acceptable au plan alimentaire utilisé pour la trempe est l'acide alginique.

9. Procédé selon la revendication 7 ou 8, dans lequel au moins un autre acide acceptable au plan alimentaire est dissous ou mis en suspension dans la solution ou suspension aqueuse d'au moins un acide polymère acceptable au plan alimentaire utilisé pour la trempe.

10. Procédé selon la revendication 9, dans lequel chaque dit autre acide acceptable au plan alimentaire dissous ou mis en suspension dans la solution ou suspension aqueuse utilisée pour la trempe est sélectionné dans le groupe comprenant les acides citrique, malique, acétique, fumarique, tartrique, phosphorique, adipique, lactique, ascorbique, sorbique, propionique, érythorbique, sulfurique et chlorhydrique.

11. Procédé selon l'une quelconque des revendications précédentes, qui consiste à soumettre le produit alimentaire à des conditions de traitement telles que le produit alimentaire soit à l'état pasteurisé par l'acide.

12. Procédé selon l'une quelconque des revendications précédentes, qui consiste à soumettre le produit alimentaire à des conditions de traitement telles que le produit alimentaire soit à l'état précuit.

13. Procédé selon l'une quelconque des revendications 3 à 10, qui consiste par ailleurs à séparer ledit produit alimentaire cuit de la solution ou suspension résiduelle.

14. Procédé selon l'une quelconque des revendications 3 à 10, qui consiste par ailleurs à mettre en contact ledit produit alimentaire cuit avec une quantité d'huile comestible suffisante pour empêcher l'agglutination du produit alimentaire.

15. Procédé selon la revendication 14, dans lequel ladite quantité d'huile comestible est de 0,5 à 1 % en poids du produit alimentaire.

16. Procédé selon l'une quelconque des revendications précédentes, qui consiste à traiter ledit produit alimentaire de telle sorte que le produit alimentaire ait un pH inférieur à 4,6.

17. Procédé selon la revendication 16, qui consiste à traiter ledit produit alimentaire de telle sorte que le produit alimentaire ait un pH compris entre 3,8 et 4,2.

18. Procédé selon l'une quelconque des revendications précédentes, consistant par ailleurs à conditionner le produit alimentaire dans un récipient.

19. Procédé selon la revendication 18, qui consiste à soumettre le produit alimentaire à des conditions telles que le produit alimentaire dans le conditionnement soit à l'état précuit ou partiellement cuit.

20. Procédé selon la revendication 18 ou 19, dans lequel ladite étape de conditionnement consiste à insérer une quantité mesurée dudit produit alimentaire dans le récipient, à balayer le récipient par un gaz inerte et à sceller le récipient.

21. Procédé selon la revendication 16 ou 17, dans lequel ladite étape de conditionnement consiste à mettre sensiblement sous vide le récipient pour conserver le produit alimentaire.

22. Procédé selon l'une quelconque des revendications 18 à 21, dans lequel ledit récipient est imperméable aux micro-organismes, étanche à l'eau ou à la fois imperméable aux micro-organismes et étanche à l'eau.

23. Procédé selon l'une quelconque des revendications 18 à 22, dans lequel ledit récipient est un plateau ou un sachet de matière plastique.

**24.** Procédé selon la revendication 23, dans lequel ledit plateau ou sachet de matière plastique est constitué d'un stratifié d'une couche de renfort et d'une couche d'étanchéité.

**25.** Procédé selon l'une quelconque des revendications 18 à 24, dans lequel le produit alimentaire est traité par ledit au moins un acide polymère acceptable au plan alimentaire pour assurer une stabilisation par l'acide du produit alimentaire après ladite étape de conditionnement.

**26.** Produit alimentaire stabilisé par un acide, comprenant un acide polymère acceptable au plan alimentaire, autre que le riz, ayant un pH inférieur à 4,6 et susceptible d'être obtenu par un procédé selon l'une quelconque des revendications 1 à 17.

**27.** Récipient contenant un produit alimentaire, stabilisé par un acide, autre que le riz, comprenant un acide polymère acceptable au plan alimentaire, ayant un pH inférieur à 4,6, récipient dans lequel est conditionné le produit alimentaire susceptible d'être obtenu par un procédé selon l'une quelconque des revendications 18 à 25.